Europäisches Patentamt

European Patent Office

Office européen des brevets

(19)

(11) **EP 0 961 425 A1**

(12) **DEMANDE DE BREVET EUROPEEN**

(43) Date de publication:
01.12.1999 Bulletin 1999/48

(51) Int Cl.⁶: **H04B 10/18**

(21) Numéro de dépôt: **99401270.6**

(22) Date de dépôt: **27.05.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **28.05.1998 FR 9806764**

(71) Demandeur: **ALCATEL**
**75008 Paris (FR)**

(72) Inventeurs:
• **Leclerc, Olivier**
**91420 St Michel sur Orge (FR)**
• **Desurvire, Emmanuel**
**91680 Bruyeres le Chatel (FR)**

(74) Mandataire: **Lamoureux, Bernard et al**
**COMPAGNIE FINANCIERE ALCATEL**
**Dépt. Propriété industrielle**
**30, avenue Kléber**
**75116 Paris (FR)**

(54) **Système de transmission à fibre optique à signaux solitons et à double filtrage**

(57)  L'invention concerne un système de transmission à fibre optique à signaux solitons, comprenant des moyens d'amplification des signaux (2ᵢ) et des moyens de régénération des signaux (6, 7, 9), des premiers moyens de filtrage en ligne (3ᵢ) et des seconds moyens de filtrage (8) associés aux moyens de régénération, et différents des premiers moyens de filtrage.

L'optimisation indépendante des moyens de filtrage en ligne et des moyens de filtrage associés au régénérateur permet d'améliorer les performances du système de transmission.

Dans le cas des systèmes multiplexés en longueur d'onde, l'invention permet de réduire les effets de gigue induits par les collisions entre solitons.

FIG_1

EP 0 961 425 A1

## Description

La présente invention a pour objet un système de transmission à fibre optique à signaux solitons, ainsi qu'un procédé de transmission dans un tel système, qui permettent de réduire les effets de la gigue de collision.

La transmission d'impulsions solitons ou solitons dans la partie d'une fibre optique à dispersion anormale est un phénomène connu. Les solitons sont des signaux impulsionnels de forme $sech^2$. Avec cette forme d'impulsion, la non-linéarité dans la partie correspondante de la fibre compense la dispersion du signal optique. La transmission des solitons est modélisée de façon connue par l'équation de Schrödinger non-linéaire.

Divers effets limitent la transmission de telles impulsions, comme la gigue induite par l'interaction des solitons avec le bruit présent dans le système de transmission, décrite par exemple dans l'article de J. P. Gordon et H. A. Haus, Optical Letters, vol. 11, n 10, pages 665-667. Cet effet, appelé effet Gordon-Haus ou gigue Gordon-Haus, impose une limite théorique à la qualité ou au débit des transmissions par solitons.

Pour arriver à dépasser ces limite, il est possible d'utiliser une modulation synchrone des signaux solitons, à l'aide de modulateurs semi-conducteurs. Il a aussi été proposé des systèmes de filtres guidants glissants, permettant de contrôler la gigue des solitons transmis, voir par exemple EP-A-0 576 208. Il a aussi été proposé, pour assurer la régénération du signal sur la ligne, d'utiliser l'effet Kerr dans des modulateurs synchrones d'amplitude ou de phase, ou encore d'utiliser des absorbants saturables. Une modulation synchrone des signaux solitons, par un signal d'horloge ou horloge, pour corriger leur gigue temporelle, est par exemple décrite dans un article de H. Kubota et M. Nakasawa, IEEE Journal of Quantum Electronics, vol. 29 n° 7 (1993), p. 2189 et s., pour ce qui est de la modulation d'intensité, et dans un article de N. J. Smith et N. J. Doran, Optical Fiber Technology, 1, p. 218 (1995), pour ce qui est de la modulation de phase. L'article de Kubota propose d'associer un filtre au régénérateur pour contrôler les fluctuations d'amplitude générées par la modulation.

Par ailleurs, pour augmenter le débit des systèmes de transmission à fibre optique à signaux solitons, il a aussi été proposé d'utiliser un multiplexage de longueur d'onde (en anglais "wavelength division multiplexing ou WDM). Dans ce cas, il est considéré comme avantageux d'utiliser des filtres guidants glissants du type Fabry Perot, qui sont entièrement compatibles avec des signaux mutliplexés en longueur d'onde. En revanche, l'utilisation de modulateurs synchrones ou d'absorbants saturables pour la régénération de signaux solitons multiplexés en longueur d'onde est problématique, du fait de la différence de vitesse de groupe entre les signaux des différents canaux.

Un article de E. Desurvire, O. Leclerc et O. Audouin, Optics Letters, vol. 21, n° 14, pages 1026-1028 décrit un schéma d'allocation des longueurs d'ondes, qui soit compatible avec l'utilisation de modulateurs synchrones. Cet article propose d'allouer des longueurs d'ondes aux différents canaux du multiplex de telle sorte que, pour des intervalles $Z_R$ donnés entre les répéteurs, les signaux des différents canaux, ou plus exactement les temps bits des différents canaux du multiplex soient sensiblement synchronisés en arrivant aux répéteurs. On permet ainsi une modulation synchrone en ligne de tous les canaux, à des intervalles donnés, à l'aide de modulateurs synchrones discrets. Cette technique d'allocation des longueurs d'ondes du multiplex est aussi décrite dans la demande de brevet français 9600732 du 23 janvier 1996 au nom de Alcatel Submarine Networks. Dans cet article, il est proposé de choisir un sous groupe de canaux, synchrones non seulement à des intervalles $Z_R$, mais aussi à des intervalles sous multiples de $Z_R$. D'autres aspects de cette technique d'allocation de longueur d'ondes sont décrits dans les articles de O. Leclerc, E. Desurvire et O. Audouin, Synchronous WDM Soliton Regeneration : Toward 80-160 Gbit/s Transoceanic Systems, Optical Fiber Technology, 3 pages 97-116 (1997) et de E. Desurvire et al., Transoceanic Regenerated Soliton Systems: Designs for over 100 Gbit/s Capacities, Suboptic '97, pages 438-447. On pourra aussi consulter la demande de brevet FR-A-2 743 964, Méthode et dispositif de régénération en ligne d'un signal transmis par solitons multiplexés en longueur d'onde via la modulation synchrone et système de télécommunications optiques utilisant la méthode.

Un article de L. F. Mollenauer, S. G. Evangelides, et P. J. Gordon, Wavelength Division Multiplexing with Solitons in Ultra long Distance Transmissions using Lumped Amplifiers, Journal of Lightwave Technology, vol. 9 no 3, pages 362-367 (1991) décrit le problème des collisions entre solitons dans les systèmes de transmission à multiplexage de longueur d'onde, et insiste notamment sur les variations de vitesse de propagation induites par les collisions; de telles variations peuvent induire, en sortie du système de transmission, une gigue inacceptable sur les solitons; cet article explique que des variations de la dispersion chromatique de la fibre le long du chemin de transmission peuvent compenser les effets des collisions; il est en conséquence proposé d'utiliser des segments de dispersion différente, pour compenser les effets des collisions sur la vitesse de propagation des solitons; dans un système de transmission où la distance entre amplificateurs est faible devant la longueur des collisions.

Cette solution est difficilement applicable à l'échelle industrielle, du fait des contraintes dans la gestion des fibres, et du faible espacement entre les amplificateurs. En outre, elle ne s'applique pas à des systèmes de transmission à multiplexage de longueur d'onde utilisant des schémas d'allocation de longueur d'onde du type de ceux évoqués plus haut, dans la mesure où des variations de la dispersion de la fibre perturberaient la synchronicité des temps bit aux régénérateurs synchrones.

Un article de A. Hasegawa, S. Kumar et Y. Kodoma, Reduction of Collision-induced time-jitter in Dispersion-managed Solitons Transmission Systems, Optics Letters, vol. 21 no 1, Janvier 1996, pages 39-41 propose un schéma de gestion des dispersion dans la fibre, permettant d'augmenter la distance entre les amplificateurs. Cette solution repose sur un profil de dispersion par paliers dans la fibre approchant autant que possible un profil idéal exponentiel. Cette solution n'est pas susceptible d'être mise en oeuvre industriellement, et pose problème avec le schéma d'allocation des fréquences mentionné plus haut.

L'invention a pour objet une solution au problème de l'optimisation du filtrage dans un système de transmission à signaux solitons à régénération synchrone; dans le cas monocanal comme dans le cas d'un système de transmission en multiplexage de longueur d'onde, elle permet de réguler la montée de bruit et de réduire les fluctuations d'amplitude induites par la modulation synchrone. L'invention a aussi pour objet une solution au problème de la gestion des collisions entre solitons dans un système de transmission à signaux; elle évite de devoir faire varier le profil de dispersion de la fibre de transmission le long du système de transmission. L'invention s'applique particulièrement avantageusement aux système de transmission à multiplexage de longueurs d'onde dans lesquels les longueurs d'onde sont choisies de sorte à assurer une synchronicité des temps bit des différents canaux à des intervalles donnés. L'invention propose une solution simple, qui limite la gigue temporelle due aux collisions entre solitons. L'invention s'applique aussi aux systèmes de transmission à signaux soliton monocanaux. Pour de tels systèmes, elle permet une amélioration des performances de transmission.

Plus précisément, l'invention propose un système de transmission à fibre optique à signaux solitons, comprenant des moyens d'amplification des signaux et des moyens de régénération des signaux, des premiers moyens de filtrage en ligne et des seconds moyens de filtrage associés aux moyens de régénération, les seconds moyens de filtrage étant différents des premiers moyens de filtrage.

Dans un mode de réalisation, les premiers moyens de filtrage présentent une bande passante supérieure à celle des seconds moyens de filtrage.

De préférence, les premiers moyens de filtrages sont disposés en aval des moyens d'amplification.

Dans un autre mode de réalisation, les seconds moyens de filtrage sont disposés en amont des moyens de régénération.

Avantageusement, les moyens de régénération comprennent un modulateur d'intensité.

Dans un mode de réalisation, le système est un système monocanal et les seconds moyens de filtrage présentent une bande passante comprise entre le quart et la moitié de celle des premiers moyens de filtrage, de préférence de l'ordre du tiers de celle des premiers moyens de filtrage.

Dans un autre mode de réalisation, le système est un système à multiplexage de longueur d'onde, et les seconds moyens de filtrage présentent une bande passante supérieure aux deux tiers de celle des premiers moyens de filtrage.

L'invention propose aussi un procédé de transmission de signaux solitons, comprenant au moins une étape d'amplification des signaux, au moins une étape de régénération des signaux, au moins une étape de filtrage en ligne et au moins une étape de filtrage de régénération, par des seconds moyens de filtrage différents des premiers moyens de filtrage utilisés pour l'étape de filtrage en ligne.

Avantageusement, les premiers moyens de filtrage présentent une bande passante supérieure à celle des seconds moyens de filtrage.

On peut aussi prévoir qu'une étape de filtrage en ligne est effectuée immédiatement après une étape d'amplification.

De préférence, une étape de filtrage de régénération est effectuée immédiatement avant une étape de régénération.

Avantageusement, l'étape de régénération comprend un modulation d'intensité.

Dans un mode de mise en oeuvre, la transmission est une transmission monocanal et les seconds moyens de filtrage présentent une bande passante comprise entre le quart et la moitié de celle des premiers moyens de filtrage, de préférence de l'ordre du tiers de celle des premiers moyens de filtrage.

Dans un autre mode de mise en oeuvre, la transmission est une transmission en multiplex de longueur d'onde, et les seconds moyens de filtrage présentent une bande passante supérieure aux deux tiers de celle des premiers moyens de filtrage.

D'autres caractéristiques et avantages de l'invention apparaîtront à la lecture de la description qui suit de modes de réalisation de l'invention, donnée à titre d'exemple et en référence aux dessins annexés qui montrent:

- figure 1 une représentation schématique d'une section d'un système de transmission à signaux solitons et à multiplexage de longueurs d'onde selon l'invention;
- figure 2, un graphe du facteur Q en fonction de la distance, dans un système de transmission présentant un seul type de filtre;
- figure 3, un graphe du facteur Q en fonction de la distance, dans un système de transmission selon l'invention;
- figure 4, un graphe montrant la valeur du facteur Q en fonction des bandes passantes des deux types de filtres, dans un système monocanal.

L'invention s'applique en particulier à un système de transmission à fibre optique à signaux solitons et à multiplexage de longueur d'onde. Elle est décrite dans la suite en référence à un système dans lequel les différentes longueurs d'onde du multiplex sont choisies de sorte à assurer, sur un intervalle donné, un glissement relatif entre les différents canaux sensiblement égal à un multiple du temps bit. Toutefois, elle n'est pas limitée à un système de transmission mettant en oeuvre un tel schéma d'allocation des fréquences, et s'applique plus généralement à tout système de transmission à signaux solitons à multiplexage de longueurs d'onde.

Dans l'exemple proposé, on peut utiliser les solutions d'allocation de longueurs d'onde décrits dans les articles de E. Desurvire et O. Leclerc mentionnés plus haut. Ces articles sont notamment pertinents en ce qui concerne les schémas d'allocation de longueur d'ondes. Un tel schéma d'allocation de longueurs d'ondes assure, à intervalles réguliers $Z_R$ le long de la fibre, un glissement relatif entre les différents canaux sensiblement égal à un multiple du temps bit.

Le problème dans un système de transmission à multiplexage de longueurs d'onde, et en particulier dans un système avec un tel schéma d'allocation des longueurs d'ondes, est que les collisions entre les signaux solitons dans les amplificateurs ou plus généralement dans tout dispositif asymétrique du système, induisent une variation de la fréquence des solitons; cette variation se traduit par une gigue temporelle à l'arrivée; le signe de la variation de fréquence dépend de la position spectrale relative des signaux solitons subissant la collision; à titre d'exemple, si on considère deux trains de solitons à des longueurs d'onde $\lambda_1$ et $\lambda_2$, avec $\lambda_1 < \lambda_2$, la collision entre les signaux solitons du train à $\lambda_1$, plus rapide, et les signaux du train à $\lambda_2$ provoque une augmentation de la longueur d'onde du train de solitons à $\lambda_2$, d'une quantité $\Delta\lambda$, et une diminution de la longueur d'onde du train à $\lambda_1$, de la même quantité. La variation de longueur d'onde $\Delta\lambda$ est donnée dans l'article précité de Mollenauer et autres.

Cette variation de longueur d'onde accélère les solitons les plus rapides, i. e. ceux dont la longueur d'onde est la plus faible, et ralentit les solitons les plus lents, i. e. ceux dont la longueur d'onde est la plus élevée. Cet effet s'explique de la façon suivante: la vitesse de propagation des solitons décroît avec la longueur d'onde et les solitons des différents canaux du multiplex se rapprochent et se traversent. Les non-linéarités dans la fibre - effet Kerr, mélange quatre ondes - induisent des perturbations; dans la première moitié de la collision, les solitons de longueurs d'onde différentes commencent par s'attirer. Leur vitesse change - le soliton le plus rapide est ralenti tandis que le soliton le plus lent est accéléré - en proportion des non-linéarités de la fibre, qui est aussi liée à l'intensité du signal. Dans la deuxième partie de la collision, les effets sont inversés. Si la non-linéarité dans la fibre est constante pendant toute l'interaction, la différence de vitesse s'annule à la fin de la collision, et les deux solitons sont affectés d'un même retard; dans un système réel, du fait des pertes dans la fibre et des variations d'intensité induites par les amplificateurs, la non-linéarité n'est pas constante pendant la collision et les collisions provoquent en conséquence une variation résiduelle de vitesse ou de fréquence des solitons.

L'invention propose, pour réduire la gigue de collision, de séparer les filtres permettant d'optimiser la régénération et le contrôle en ligne des solitons. Elle propose en conséquence de prévoir dans le système de transmission des filtres d'un premier type dédié à l'optimisation de la régénération, et des filtres d'un deuxième type dédié à l'optimisation du contrôle en ligne des solitons.

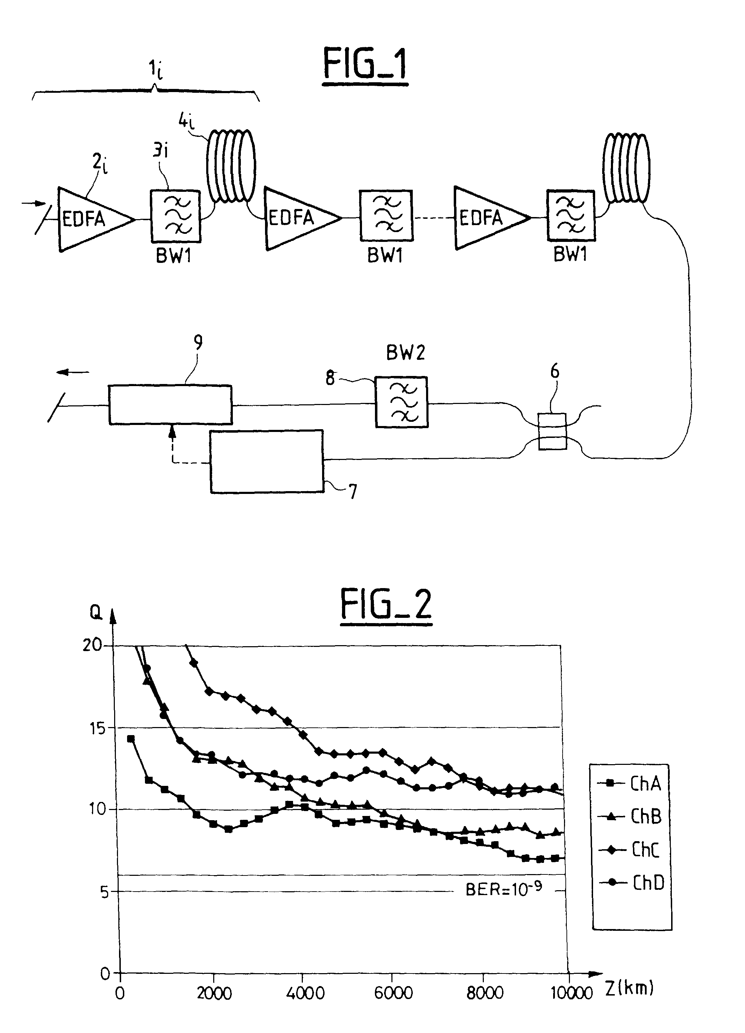

La figure 1 montre une représentation schématique d'une section d'un système de transmission à signaux solitons et à multiplexage de longueurs d'onde selon l'invention; le système de transmission est typiquement composé d'un émetteur et d'un récepteur reliés par une pluralité de section du type de celle de la figure 1. La section du système de transmission représentée à la figure 1 comprend elle même une pluralité de tronçons $1_i$, i étant un entier, et un régénérateur. Chaque tronçon comprend un amplificateur $2_i$, en sortie duquel est disposé un filtre $3_i$ d'un premier type. La sortie du filtre $3_i$ est reliée à une extrémité d'une fibre de ligne $4_i$, dont l'autre extrémité forme la fin du tronçon $1_i$. Typiquement, chaque tronçon présente une fibre de ligne d'une longueur comprise entre 30 et 100 km, par exemple 45km, et les amplificateurs sont des amplificateurs à fibre dopée à l'erbium, utilisant une longueur de l'ordre de 20 m de fibre fortement dopée à l'erbium. On prévoit par exemple qu'une section présente une longueur totale de l'ordre de 900 km, soit de 9 à 30 tronçons de fibre de ligne. Le nombre de tronçons et leur longueur unitaire sont choisis, dans le cas d'un système de transmission en multiplexage de longueur d'onde, de sorte que les régénérateurs soient espacés d'un intervalle $Z_R$ assurant la synchronicité des temps bit.

Les filtres $3_i$ disposés en sortie des amplificateurs sont optimisés pour supprimer une partie du bruit d'émission spontanée asynchrone, en dehors du ou des canaux de transmission. Dans le cas d'une transmission en multiplexage de longueurs d'onde, les filtres $3_i$ sont par exemple des filtres de Fabry Perot, ou des filtres associés à un multiplexeur / démultiplexeur. Pour un système monocanal, les filtres peuvent être par exemple des filtres de Buttersworth, ou encore des filtres de Bragg.

L'optimisation des filtres s'effectue de façon connue en soi de sorte à minimiser les effets du bruit d'émission spontanée asynchrone en dehors du canal de transmission.

La section de la figure 1 comprend aussi un régénérateur, qui est ici un modulateur synchrone. Comme expliqué plus haut, il peut s'agir d'un modulateur d'intensité ou de phase. La position de ce modulateur, i. e. la longueur de la section du système de transmission représentée à la figure 1, est avantageusement choisie de sorte à assurer une synchronicité ou une quasi-synchronicité des temps bit des différents canaux du multiplex à l'arrivée sur le modulateur. Le modulateur comprend un coupleur 6, par exemple un coupleur 10/90 qui permet de prélever une partie du signal transmis pour la régénération d'un horloge de modulation. La référence 7 indique le dispositif de régénération d'horloge, qui reçoit la partie du signal dérivée par le coupleur 6 et fournit un signal d'horloge au modulateur 9. En aval du coupleur est prévu un filtre d'un deuxième type 8, puis un modulateur synchrone. Le modulateur 9 reçoit le signal d'horloge fourni par le dispositif de régénération d'horloge, et module les signaux solitons. En sortie du modulateur 9 est prévue une section de fibre de ligne 10.

Le filtre 8 disposé en aval du modulateur est un filtre d'un deuxième type, qui est optimisé pour la régénération, de sorte à appliquer des pertes sélectives aux signaux solitons; les solitons s'élargissent alors, et un tel élargissement améliore l'efficacité de la modulation d'intensité. Dans le cas d'une modulation de phase, le filtre assure le contrôle de la largeur spectrale des impulsions.

La figure 2 montre un graphe du facteur Q en fonction de la distance, dans un système de transmission présentant un seul type de filtre; dans ce cas, les filtres sont optimisés pour à la fois assurer la réduction du bruit en ligne et améliorer l'optimisation. Pour la simulation de la figure 2, on a utilisé un système de transmission présentant les caractéristiques suivantes:

distance entre amplificateurs: $Z_A = 50$ km;
gain des amplificateurs: 10 dB;
distance entre les modulateurs: $Z_R = 350$ km;
nature des modulateurs: modulateurs d'intensité et de phase;
filtres en sortie de chaque amplificateur et en entrée du modulateur, tous les $Z_R$: filtres de Fabry Perot.

La figure 2 montre le facteur Q pour un système de transmission en multiplex de longueur d'onde, sur 4 canaux à 20 Gbits/s. Le facteur Q le plus faible est alors de 7 sur le canal A, pour une distance de propagation de 10 Mm.

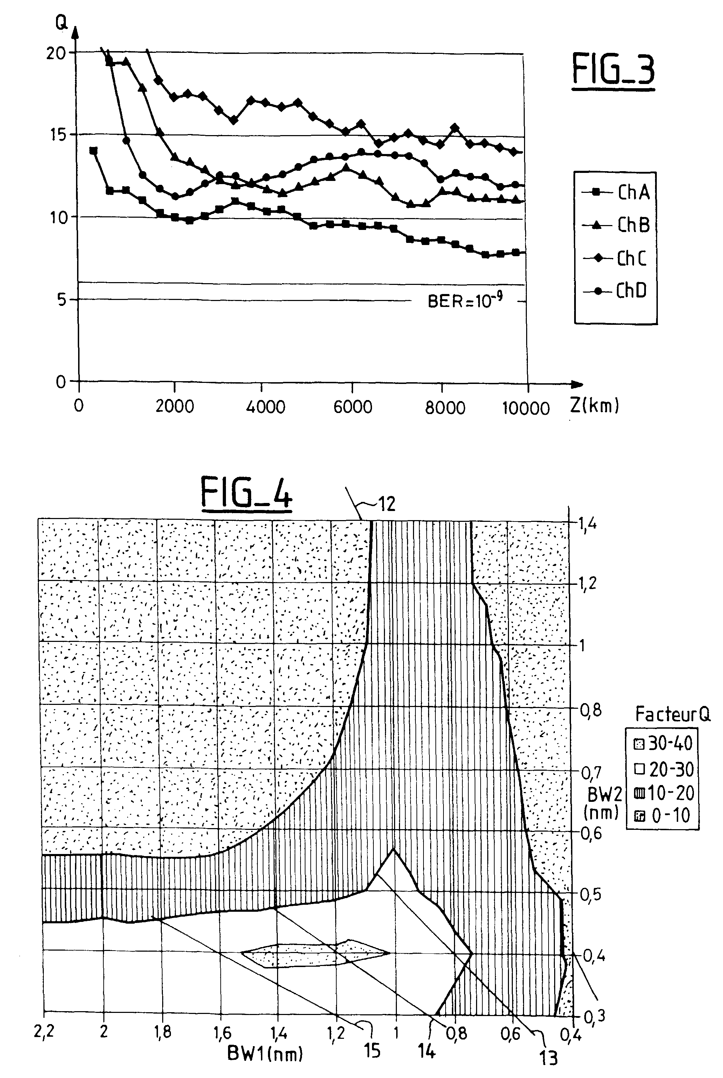

La figure 3 montre un graphe du facteur Q en fonction de la distance, dans un système de transmission selon l'invention, du type décrit en référence à la figure 1, avec des filtres de ligne tous les $Z_A$, et des filtres de modulation tous les $Z_R$, qui sont optimisés indépendamment les uns des autres.

La figure 3 montre que le facteur Q le plus faible, pour une distance de propagation de 10 Mm, est de 8; l'invention permet aussi une augmentation notable du facteur Q sur les canaux B, C et D, qui pour la même distance de propagation de 10 Mm, passent respectivement de 8,5 à 11, de 11 à 14 et de 11 à 12.

La figure 4 montre un graphe de la valeur du facteur Q en fonction des bandes passantes des deux types de filtres, dans un système monocanal. En effet, si l'invention a été décrite dans les exemples précédents dans le cas d'un système en multiplex de longueur d'onde, elle s'applique aussi avantageusement dans un système de transmission monocanal. La différence majeure avec le système de transmission décrit en référence à la figure 1 réside dans la nature des filtres. Pour un système monocanal, on peut utiliser des filtres de toute nature, et pas seulement des filtres Fabry Perot. Le système utilisé pour obtenir le graphe de la figure est un système monocanal à 20 Gbits/s, qui présente les caractéristiques suivantes:

distance $Z_A$ entre amplificateurs : 45 km;
distance $Z_R$ entre amplificateurs : 450 km;
filtres placés derrière les amplificateurs: filtres de Buttersworth d'ordre 2 d'une bande passante à 3 dB BW1;
filtres placés devant les modulateurs: filtres de Buttersworth d'ordre 3 d'une bande passante à 3 dB BW2;

Le graphe de la figure 4 montre les plages de valeur du facteur Q du système, à une distance de propagation de 9 Mm; le graphe est obtenu par trois tirages aléatoires du bruit, et une moyenne des trois tirages. La droite 12 sur le graphe correspond grossièrement aux systèmes de l'art antérieur, dans lesquels un filtre unique est utilisé à la fois pour les amplificateurs et pour les modulateurs; le graphe montre bien qu'il existe une zone du plan (BW1, BW2) dans laquelle le facteur Q est plus élevé que sur la droite 12. Dans le mode de réalisation de la figure 4, on choisirait ainsi un filtre de ligne d'une bande passante BW1 entre 1 et 1,6 nm, tandis que le filtre de régénération serait choisi avec une bande passante de l'ordre de 0,4 nm, de préférence entre 0,37 et 0,43 nm. Plus généralement, le rapport BW1/BW2 entre les bandes passantes des filtres de ligne et des filtres de régénération est de préférence de l'ordre de 3 (droite 14); il est avantageusement supérieur à deux (droite 13) mais inférieur à quatre (droite 15).

Pour un système en multiplex de longueurs d'onde, il s'avère de façon similaire qu'un choix de filtres de ligne et de régénération différents permet d'améliorer le facteur Q; on choisit de préférence les bandes passantes BW1 et BW2 dans les rapports suivants:

$$BW2 < BW1 < 1,5.BW2$$

Dans les deux cas, il est intéressant que la bande passante BW2 du filtre de régénération soit strictement inférieure à la bande passante du filtre de ligne.

Bien évidemment, l'invention n'est pas limitée aux modes de réalisation décrits à titre d'exemple. Le schéma d'allocation de longueurs d'onde n'est aucunement limité aux exemples décrits. Il faut aussi noter que l'on peut, par rapport aux modes de réalisation décrits, ajouter ou enlever des filtres ou des amplificateurs, en fonction des besoins. On pourrait ainsi prévoir des filtres du premier type derrière un amplificateur sur deux, ou derrière un amplificateur sur trois. Il est aussi avantageux que les filtres de ligne, ou filtres du premier type, soient disposés derrière les amplificateurs; toutefois, ceci n'est pas indispensable. De la même façon, on pourrait disposer les filtres optimisés pour la régénération derrière le modulateur, notamment dans le cas d'une modulation de phase. Le système de transmission peut aussi présenter une structure différente de celle décrite en référence à la figure 1; on pourrait ainsi envisager une répartition différente des amplificateurs et des modulateurs le long de la fibre de ligne.

Enfin, l'invention a été décrite dans le cas d'une transmission monodirectionnelle. Elle s'applique à l'évidence à une transmission bidirectionnelle.

## Revendications

1. Système de transmission à fibre optique à signaux solitons, comprenant des moyens d'amplification des signaux ($2_i$) et des moyens de régénération des signaux (6, 7, 9), des premiers moyens de filtrage en ligne ($3_i$) et des seconds moyens de filtrage (8) associés aux moyens de régénération, les seconds moyens de filtrage étant différents des premiers moyens de filtrage.

2. Système de transmission selon la revendication 1, caractérisé en ce que les premiers moyens de filtrage présentent une bande passante supérieure à celle des seconds moyens de filtrage.

3. Système de transmission selon la revendication 1 ou 2, caractérisé en ce que les premiers moyens de filtrages sont disposés en aval des moyens d'amplification.

4. Système de transmission selon l'une des revendications 1 à 3, caractérisé en ce que les seconds moyens de filtrage sont disposés en amont des moyens de régénération.

5. Système de transmission selon l'une des revendications 1 à 4, caractérisé en ce que les moyens de régénération comprennent un modulateur d'intensité.

6. Système de transmission selon l'une des revendications 1 à 5, caractérisé en ce que le système est un système monocanal et en ce que les seconds moyens de filtrage présentent une bande passante comprise entre le quart et la moitié de celle des premiers moyens de filtrage, de préférence de l'ordre du tiers de celle des premiers moyens de filtrage.

7. Système de transmission selon l'une des revendications 1 à 5, caractérisé en ce que le système est un système à multiplexage de longueur d'onde, et en ce que les seconds moyens de filtrage présentent une bande passante supérieure aux deux tiers de celle des premiers moyens de filtrage.

8. Procédé de transmission de signaux solitons, comprenant au moins une étape d'amplification des signaux ($2_i$), au moins une étape de régénération des signaux (6, 7, 9), au moins une étape de filtrage en ligne ($3_i$) et au moins une étape de filtrage (8) de régénération, par des seconds moyens de filtrage différents des premiers moyens de filtrage utilisés pour l'étape de filtrage en ligne.

9. Procédé selon la revendication 8, caractérisé en ce que les premiers moyens de filtrage présentent une bande passante supérieure à celle des seconds moyens de filtrage.

10. Procédé selon la revendication 8 ou 9, caractérisé en ce qu'une étape de filtrage en ligne est effectuée immédiatement après une étape d'amplification.

11. Procédé selon l'une des revendications 8 à 10, caractérisé en ce qu'une étape de filtrage de régénération est effectuée immédiatement avant une étape de régénération.

12. Procédé selon l'une des revendications 8 à 11, caractérisé en ce que l'étape de régénération comprend un modulation d'intensité.

13. Procédé selon l'une des revendications 8 à 12, caractérisé en ce que la transmission est une transmission monocanal et en ce que les seconds moyens de filtrage présentent une bande passante comprise entre le quart et la moitié de celle des premiers moyens de filtrage, de préférence de l'ordre du tiers de celle des premiers moyens de filtrage.

14. Procédé selon l'une des revendications 8 à 12, caractérisé en ce que la transmission est une transmission en multiplex de longueur d'onde, et en ce que les seconds moyens de filtrage présentent une bande passante supérieure aux deux tiers de celle des premiers moyens de filtrage.

FIG_1

FIG_2

FIG_3

FIG_4

Office européen
des brevets

**RAPPORT DE RECHERCHE EUROPEENNE**

Numéro de la demande

EP 99 40 1270

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | SUZUKI K ET AL: "40GBIT/S SINGLE CHANNEL OPTICAL SOLITON TRANSMISSION OVER 70000 KM USING IN-LINE SYNCHRONOUS MODULATION AND OPTICAL FILTERING" ELECTRONICS LETTERS, vol. 34, no. 1, 8 janvier 1998 (1998-01-08), pages 98-100, XP000773631 * le document en entier * | 1-4,8-12 | H04B10/18 |
| Y | EP 0 718 992 A (ALCATEL NV) 26 juin 1996 (1996-06-26) * colonne 1, ligne 20 - ligne 28 * * colonne 10, ligne 56 - colonne 11, ligne 6 * * figure 8 * | 1-4,8-12 | |
| A | NAKAZAWA M ET AL: "40GBIT/S WDM (10GBIT/S X 4 UNEQUALLY SPACED CHANNELS) COLITON TRANSMISSION OVER 10000KM USING SYNCHRONUS MODULATION AND NARROW BAND OPTICAL FILTERING" ELECTRONICS LETTERS, vol. 32, no. 9, 25 avril 1996 (1996-04-25), pages 828-830, XP000595674 * page 828, colonne de droite * * figure 1 * | 1-14 | DOMAINES TECHNIQUES RECHERCHES (Int.Cl.6) H04B G02F |

Le présent rapport a été établi pour toutes les revendications

| Lieu de la recherche | Date d'achèvement de la recherche | Examinateur |
|---|---|---|
| LA HAYE | 6 septembre 1999 | Ribbe, A |

EPO FORM 1503 03.82 (P04C02)

**ANNEXE AU RAPPORT DE RECHERCHE EUROPEENNE
RELATIF A LA DEMANDE DE BREVET EUROPEEN NO.**  EP 99 40 1270

La présente annexe indique les membres de la famille de brevets relatifs aux documents brevets cités dans le rapport de
recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

06-09-1999

| Document brevet cité au rapport de recherche | Date de publication | Membre(s) de la famille de brevet(s) | | Date de publication |
|---|---|---|---|---|
| EP 0718992 A | 26-06-1996 | FR | 2728746 A | 28-06-1996 |
| | | AU | 4054595 A | 04-07-1996 |
| | | CA | 2165611 A | 24-06-1996 |
| | | JP | 8248453 A | 27-09-1996 |
| | | US | 5757529 A | 26-05-1998 |

EPO FORM P0460

Pour tout renseignement concernant cette annexe : voir Journal Officiel de l'Office européen des brevets, No.12/82